# EUROPÄISCHE PATENTSCHRIFT

(11) **EP 4 151 069 B1**
(45) Veröffentlichungstag und Bekanntmachung des Hinweises auf die Patenterteilung: **08.07.2026**
(21) Anmeldenummer: 22401023.1
(22) Anmeldetag: 05.09.2022
(51) Int. Cl.: A01C 5/06, A01C 7/20, A01C 21/00, A01C 7/10

(54) **FANGROLLE FÜR EIN AUSBRINGAGGREGAT EINER LANDWIRTSCHAFTLICHEN AUSBRINGMASCHINE**
CATCH ROLLER FOR A DISCHARGE UNIT OF AN AGRICULTURAL DISTRIBUTION MACHINE
ROULEAU DE RETENUE POUR UN DISPOSITIF D'ÉPANDAGE D'UNE MACHINE D'ÉPANDAGE AGRICOLE

(30) Priorität: 15.09.2021 DE 102021123828
(43) Veröffentlichungstag der Anmeldung: 22.03.2023
(73) Patentinhaber: Amazonen-Werke H. Dreyer SE & Co. KG, 49205 Hasbergen (DE)
(72) Erfinder: Wessels, Thomas, 49080 Osnabrück (DE); Wessels, Mario, 27777 Ganderkesee (DE); Koch, Jens, 29525 Uelzen (DE); Kreilos, Maximilian, 37696 Marienmüster (DE)

(56) Entgegenhaltungen:
- EP-A1- 3 165 063
- US-A1- 2020 390 025
- US-A1- 2021 007 273

## Beschreibung

Die Erfindung betrifft eine Fangrolle für ein Ausbringaggregat einer landwirtschaftlichen Ausbringmaschine nach dem Oberbegriff des Patentanspruchs 1 und ein Ausbringaggregat für eine landwirtschaftliche Ausbringmaschine nach dem Oberbegriff des Patentanspruchs 15.

Derartige Fangrollen sind in US 2021/007273 A1 und EP 3 165 063 A1 offenbart.

Bei der Ausbringung von Material auf eine landwirtschaftliche Nutzfläche, beispielsweise beim Ausbringen von Saatgut, wird der Ausbringvorgang vermehrt auch zur Ermittlung von Bodeneigenschaften genutzt. Hierzu werden Bodensensoren eingesetzt, welche an den Ausbringaggregaten der Ausbringmaschinen angeordnet sind und während des Ausbringvorgangs im Nahbereich des Bodens oder durch den Boden über die landwirtschaftliche Nutzfläche bewegt werden.

Die Sensoren sind dabei üblicherweise an einem Trägerrahmen des Ausbringaggregats oder einem an dem Trägerrahmen befestigten Tragarm angeordnet. Aufgrund der Anordnung der Sensoren im Nahbereich des Bodens oder sogar unterhalb der Bodenkante sind die Sensoren durch den teils schleifenden Kontakt mit dem Boden sehr verschleißanfällig.

Die Druckschrift US 2020/0390025 A1 offenbart einen in einer Zahnscheibe integrierten Bodensensor. Die Druckschrift WO 2016/205422 A1 schlägt eine in eine Kufe integrierte Sensoranordnung vor. Aus der Druckschrift EP 3 150 045 B1 ist die Anordnung eines Sensors an einem Träger hinter dem Säschar und hinter einer Furchenschließrolle bekannt. Es ist darüber hinaus aus der Druckschrift EP 3 360 402 B1 ein an einem Furchenformer angeordneter Bodensensor bekannt.

Diese und andere Bodensensoren erfordern jedoch auch ein zusätzliches Bauelement, an welchem der Bodensensor befestigt und in einer geeigneten Weise zum Boden ausgerichtet werden kann.

Die der Erfindung zugrunde liegende Aufgabe besteht somit darin, den Verschleiß an einem an einem Ausbringaggregat angeordneten Bodensensor zu verringern, ohne dass hierfür zusätzliche Bauelemente zum verschleißgeschützten Tragen des Bodensensors erforderlich sind.

Die Aufgabe wird gelöst durch eine Fangrolle mit den Merkmalen des Anspruchs 1, wobei die erfindungsgemäße Fangrolle zumindest eine sensorische Detektionseinrichtung aufweist, welche dazu eingerichtet ist, während einer Drehbewegung der Fangrolle Bodeneigenschaften zu detektieren.

Die Hauptaufgabe einer Fangrolle, den optimalen Kontakt zwischen dem ausgebrachten Material, beispielsweise Saatgut, und dem Boden zu gewährleisten, wird somit erweitert, sodass die Fangrolle nun auch zur Detektion von Bodeneigenschaften dient. Durch die Integration einer sensorischen Detektionseinrichtung in die Fangrolle reduziert sich der Verschleiß der Detektionseinrichtung. Ferner muss nicht zwingend ein zusätzliches Bauelement an dem Ausbringaggregat oder an anderer Stelle eingebracht werden, um die Detektionseinrichtung zu tragen. Hierdurch wird auch die Verstopfungsanfälligkeit bei der Verwendung des Ausbringaggregats deutlich verringert.

Die Detektionseinrichtung kann beispielsweise einen Kontaktsensor umfassen, welcher zur Detektion von Bodeneigenschaften mit dem Boden in Kontakt zu bringen ist. In diesem Fall besteht nur noch ein abwälzender und kein schleifender Kontakt mit dem Boden. Die Detektionseinrichtung kann auch einen berührungslos arbeitenden Sensor umfassen. Die Detektionseinrichtung kann auch einen Bildsensor umfassen und/oder als Kamera ausgebildet sein.

In einer bevorzugten Ausführungsform der erfindungsgemäßen Fangrolle ist die Detektionseinrichtung derart angeordnet, dass sich die Ausrichtung der Detektionseinrichtung relativ zum Boden während einer Drehbewegung der Fangrolle verändert. Alternativ oder zusätzlich kann die Detektionseinrichtung derart angeordnet sein, dass sich die Detektionseinrichtung während einer Drehbewegung der Fangrolle entlang einer umlaufenden Bewegungsbahn bewegt. Die umlaufende Bewegungsbahn, entlang welcher sich die Detektionseinrichtung während der Drehbewegung der Fangrolle bewegt, ist vorzugsweise eine Kreisbahn und weist insbesondere einen Bahndurchmesser auf. Der Bahndurchmesser der Kreisbahn ist vorzugsweise kleiner als der Außendurchmesser der Fangrolle.

In einer anderen bevorzugten Ausführungsform weist die erfindungsgemäße Fangrolle eine umlaufende Abrollfläche auf, welche dazu eingerichtet ist, auf dem Boden einer landwirtschaftlichen Nutzfläche abzurollen, wobei die umlaufende Bewegungsbahn der Detektionseinrichtung vorzugsweise radial beabstandet von der umlaufenden Abrollfläche verläuft. Der Bahndurchmesser der Bewegungsbahn der Detektionseinrichtung ist vorzugsweise kleiner als der Durchmesser der Abrollfläche. Die Detektionseinrichtung kommt somit bei einer Abrollbewegung der Fangrolle nicht in Kontakt mit dem Boden. Der Sensor der Detektionseinrichtung ist in diesem Fall vorzugsweise ein berührungslos arbeitender Sensor. Die Detektionseinrichtung kann an einem Sensorträger befestigt sein, wobei der Sensorträger Bestandteil der Fangrolle ist. Die Abrollfläche kann auch segmentiert, profiliert und/oder unterbrochen sein. Die Abrollfläche ist vorzugsweise Bestandteil eines verformbaren Walkmaterials, welches während des Abrollens auf dem Boden Walkarbeit verrichtet.

In einer anderen bevorzugten Ausführungsform weist die erfindungsgemäße Fangrolle einen drehbaren Rollenkörper auf, wobei die Detektionseinrichtung an oder in dem Rollenkörper befestigt ist. Der Rollenkörper kann mehrteilig ausgebildet sein. Wenn die Detektionseinrichtung an einem Sensorträger befestigt ist, kann der Sensorträger an dem Rollenkörper fixiert sein. Der Rollenkörper kann teilweise oder vollständig aus Kunststoff oder Metall ausgebildet sein.

In einer weiteren vorteilhaften Ausführungsform der erfindungsgemäßen Fangrolle ist die Detektionseinrichtung an einer verstellbaren Positioniervorrichtung angeordnet und die Position der Detektionseinrichtung ist mittels der Positioniervorrichtung relativ zur Abrollfläche und/oder zum Rollenkörper veränderbar. Die verstellbare Positioniervorrichtung kann an oder in dem Rollenkörper angeordnet und/oder befestigt sein. Die Position der Detektionseinrichtung kann also über die verstellbare Positioniervorrichtung innerhalb des Rollenkörpers oder außerhalb des Rollenkörpers verändert werden. Die Detektionseinrichtung kann über die Positioniervorrichtung verschwenkbar, verdrehbar und/oder verschiebbar sein. Durch die Bewegbarkeit der Detektionseinrichtung kann der Abstand der Detektionseinrichtung zum Boden eingestellt werden. Dies kann beispielsweise bei unterschiedlichen Detektionsmodi vorteilhaft sein. Insofern können die unterschiedlichen Detektionsmodi unterschiedliche Abstände zwischen Detektionseinrichtung und Boden erfordern. Die Verstellbarkeit der Detektionseinrichtung kann auch vorteilhaft zur Anpassung der Sensorhöhe bei unterschiedlichen Einsinktiefen sein. Insofern kann die Sensorposition auf die Nachgiebigkeit des Bodens der landwirtschaftlichen Nutzfläche angepasst werden.

In einer weiteren bevorzugten Ausführungsform weist die erfindungsgemäße Fangrolle eine sich in axialer Richtung entlang einer Fangbreite erstreckende umlaufende Fangfläche auf, welche dazu eingerichtet ist, vor der Fangrolle auf den Boden der landwirtschaftlichen Nutzfläche abgelegtes Material zu fangen, wobei die Detektionseinrichtung hinsichtlich der Axialpositionierung innerhalb oder außerhalb der Fangbreite angeordnet ist. Alternativ oder zusätzlich weist die Detektionseinrichtung einen Detektionsbereich auf, welcher im Bereich des Bodens der landwirtschaftlichen Nutzfläche hinsichtlich der Axialpositionierung innerhalb oder außerhalb der Fangbreite liegt. Wenn die Detektionseinrichtung oder der Detektionsbereich der Detektionseinrichtung innerhalb der Fangbreite liegt, kann mittels der Detektionseinrichtung auch das abgelegte Material, dessen Ablageposition und/oder dessen Eigenschaften mittels der Detektionseinrichtung erfasst werden. Die Fangrolle kann auch mit einer Einrichtung zum Erfassen der Drehzahl oder des Drehwinkels ausgestattet sein. Über den Drehwinkel und das Signal der Detektionseinrichtung kann die exakte Position des Materials auf der landwirtschaftlichen Nutzfläche bestimmt werden. Die Position des Materials auf der landwirtschaftlichen Nutzfläche, beispielsweise die Ablageposition von Saatkörnern, kann gespeichert und/oder an eine Datenbank übertragen werden, sodass die Positionsdaten in einem späteren Bearbeitungsvorgang auf der landwirtschaftlichen Nutzfläche verwendet werden können. Wenn das ausgebrachte Material Saatgut ist, entspricht nämlich die Ablageposition der Saatkörner der späteren Pflanzenposition. Die Positionen der auf der landwirtschaftlichen Nutzfläche heranwachsenden Pflanzen ist in einer Vielzahl von Bearbeitungsvorgängen von hoher Relevanz. Die Fangrolle kann ferner mit einer Drehzahlüberwachung zur Schlupferfassung ausgestattet sein. Auf diese Weise kann etwaiger Schlupf der Fangrolle bei der exakten Bestimmung der Ablageposition des Materials auf der landwirtschaftlichen Nutzfläche berücksichtigt werden.

Die erfindungsgemäße Fangrolle wird ferner durch eine Sensorkammer vorteilhaft weitergebildet, in welcher die Detektionseinrichtung angeordnet ist. Die Detektionseinrichtung ist vorzugsweise dazu eingerichtet, Bodeneigenschaften eines in einer Detektionsrichtung der Detektionseinrichtung befindlichen Bodenbereichs zu detektieren. Die Sensorkammer weist vorzugsweise in der Detektionsrichtung der Detektionseinrichtung ein das Detektieren von Bodeneigenschaften durch die Detektionseinrichtung erlaubendes Detektionsfenster auf. Das Detektionsfenster kann offen oder geschlossen sein. Das Detektionsfenster kann eine Schutzscheibe aufweisen. Die Detektionseinrichtung ist vorzugsweise in der Sensorkammer geschützt angeordnet. Die Detektionseinrichtung kann einen oder mehrere leitende, insbesondere elektrisch leitende, Sensoren umfassen, wobei die Fangrolle zumindest in Detektionsrichtung auch leitend, insbesondere elektrisch leitend, ausgeführt sein kann. Die elektrische Leitfähigkeit des einen oder den mehreren Sensoren erlaubt beispielsweise die Erfassung eines Feuchtezustands des Bodens. Ferner kann der eine oder können die mehreren Sensoren der Detektionseinrichtung auch Thermistoren, insbesondere Kaltleiter oder Heißleiter sein, über welche die Temperatur des Bodens der landwirtschaftlichen Nutzfläche erfassbar ist.

In einer anderen bevorzugten Ausführungsform weist die erfindungsgemäße Fangrolle mehrere Detektionseinrichtungen auf, welche jeweils dazu eingerichtet sind, während einer Drehbewegung der Fangrolle Bodeneigenschaften zu detektieren, wobei die Detektionseinrichtungen voneinander abweichende Ausrichtungen und/oder Detektionsrichtungen aufweisen. Die Detektionseinrichtungen können beispielsweise gleichmäßig über den Umfang der Fangrolle verteilt sein. Die Detektionsrichtungen der mehreren Detektionseinrichtungen können zueinander strahlenförmig radial nach außen verlaufen.

Bei der erfindungsgemäßen Fangrolle ist die eine oder sind die mehreren Detektionseinrichtungen dazu eingerichtet, einen oder mehrere der folgenden Bodenparameter zu detektieren:
- die Bodenfeuchte;
- die Temperatur des Bodens;
- Nährwerte des Bodens;
- die elektrische Leitfähigkeit des Bodens.

Die Fangrolle kann auch mit unterschiedlichen Detektionseinrichtungen ausgestattet sein, wobei die jeweiligen Detektionseinrichtungen dazu eingerichtet sind, unterschiedliche Bodenparameter zu detektieren. In einer bevorzugten Ausführungsform der erfindungsgemäßen Fangrolle ist die eine oder sind die mehreren Detektionseinrichtungen dazu eingerichtet die Art des Bodens zu detektieren.

In einer weiteren bevorzugten Ausführungsform der erfindungsgemäßen Fangrolle ist die eine oder sind die mehreren Detektionseinrichtungen dazu eingerichtet, auf den Boden abgelegtes Material und/oder Eigenschaften des auf den Boden abgelegten Materials zu detektieren. Durch eine Auswertung der Sensorwerte können dann beispielsweise Materialablageparameter, insbesondere Saatgutablageparameter, wie Längsverteilung, Aussaatstärke, Ablagetiefe, Ablageposition oder andere Materialablageparameter bestimmt werden. Eine oder mehrere Detektionseinrichtungen können auch Drucksensoren umfassen, sodass die Andruckstärke als Ausbringparameter mittels der Fangrolle erfasst werden kann. Die Aussaatparameter können dann in einer Datenbank zur späteren Verwendung gespeichert werden.

Es ist darüber hinaus eine erfindungsgemäße Fangrolle vorteilhaft, bei welcher die Detektionseinrichtung derart angeordnet ist, dass die Ausrichtung der Detektionseinrichtung während einer Drehbewegung der Fangrolle relativ zum Boden im Wesentlichen beibehalten wird. Die Drehbewegung der Fangrolle wird also nicht auf die Detektionseinrichtung übertragen, wodurch eine kontinuierliche Bodendetektion durch die Detektionseinrichtung umgesetzt werden kann, ohne dass die Drehbewegung der Fangrolle die Bodendetektion temporär unterbricht. Die Detektionseinrichtung kann hierzu beispielsweise, vorzugsweise mittels eines besonders leichtgängigen Lagers, an der Achse der Fangrolle angeordnet sein, wobei die Detektionseinrichtung nach unten blickt.

In einer vorteilhaften Weiterbildung weist die erfindungsgemäße Fangrolle eine elektrische Versorgungseinrichtung auf, welche dazu eingerichtet ist, der Detektionseinrichtung kabelgebunden oder drahtlos elektrische Energie bereitzustellen. Bei einer kabelgebundenen Energiebereitstellung kann die Energieversorgungseinrichtung einen Schleifkontakt aufweisen. Eine drahtlose Bereitstellung von elektrischer Energie kann beispielsweise über Nahfeldfunktechnik umgesetzt werden.

In einer weiteren bevorzugten Ausführungsform der erfindungsgemäßen Fangrolle umfasst die Energieversorgungseinrichtung einen elektrischen Generator, welcher dazu eingerichtet ist, die aus der Drehbewegung der Fangrolle resultierende Bewegungsenergie in elektrische Energie für den Betrieb der Detektionseinrichtung zu wandeln. Die Detektionseinrichtung benötigt somit keine separate Energieversorgung durch das Bordnetz der Ausbringmaschine. Es ist ferner bevorzugt, dass die Detektionseinrichtung einen eigenen Energiespeicher aufweist oder mit einem der Detektionseinrichtung zugeordneten Energiespeicher verbunden ist, wobei der eigene oder der der Detektionseinrichtung zugeordnete Energiespeicher dazu eingerichtet ist, elektrische Energie für den Betrieb der Detektionseinrichtung bereitzustellen. Der Energiespeicher kann Bestandteil der Energieversorgungseinrichtung sein. Der Energiespeicher kann von dem Generator geladen werden. Der Energiespeicher ist beispielsweise ein Akkumulator, beispielsweise ein Lithium-Ionen-Akkumulator.

Es ist ferner eine erfindungsgemäße Fangrolle vorteilhaft, welche eine Datenübertragungseinrichtung aufweist, wobei die Datenübertragungseinrichtung dazu eingerichtet ist, Sensordaten der Detektionseinrichtung kabelgebunden oder drahtlos an einen Empfänger zu übermitteln. Der Empfänger kann eine Komponente der Ausbringmaschine sein, beispielsweise eine Steuerungseinrichtung der Ausbringmaschine. Der Empfänger kann auch ein maschinenexterner Empfänger sein, beispielsweise eine Datenbank, in welcher die Sensordaten gespeichert werden. Bei einer kabelgebundenen Datenübertragung kann die Datenübertragungseinrichtung eine Drehdurchführung aufweisen. Die Datenübertragungseinrichtung kann dazu eingerichtet sein, die Sensordaten über ein Kommunikationsnetzwerk und/oder über Funk zu übertragen. Die Funkübertragung kann über Kurzstrecken-Funktechnik und/oder über Mobilfunk erfolgen.

Die der Erfindung zugrunde liegende Aufgabe wird ferner durch ein Ausbringaggregat der eingangs genannten Art gelöst, wobei die Fangrolle des erfindungsgemäßen Ausbringaggregats nach einer der vorstehend beschriebenen Ausführungsformen ausgebildet ist. Hinsichtlich der Vorteile und Modifikationen des erfindungsgemäßen Ausbringaggregats wird zunächst auf die Vorteile und Modifikationen der erfindungsgemäßen Fangrolle verwiesen.

Die Detektionseinrichtung der Fangrolle oder eine separate Detektionseinrichtung kann dazu eingerichtet sein, die seitliche Ausdehnung der Fangrolle, insbesondere der Abrollfläche, zu erfassen, sodass daraus ein Abstand zwischen der Achse der Fangrolle und dem Boden ermittelt werden kann. Eine erste Detektionseinrichtung kann auf einer Seite der Fangrolle angeordnet sein und eine zweite Detektionseinrichtung kann auf der gegenüberliegenden Seite der Fangrolle angeordnet sein. Die Fangrolle kann starr zu einem Säschar angeordnet sein und der Kontur der Saatfurche und des Saatgutes durch ihr Walkverhalten folgen. Die Fangrolle kann durch ihr Walkverhalten die Tiefe der Furche vorgeben. Beim Walken wird die Fangrolle seitlich ausgedehnt bzw. ausgebeult. Durch das Messen der seitlichen Ausdehnung der Fangrolle kann die Ablagetiefe errechnet werden. Vorzugsweise ist die Detektionseinrichtung mit einer Datenverarbeitungseinrichtung verbunden, welche dazu eingerichtet ist, aus der seitlichen Ausdehnung der Fangrolle die Ablagetiefe zu berechnen. Alternativ kann auch innerhalb der Fangrolle ein Abstand bis zu dem die Fangrolle tragenden Material gemessen werden.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel der erfindungsgemäßen Fangrolle in einer schematischen Seitenansicht;
- Fig. 2: ein weiteres Ausführungsbeispiel der erfindungsgemäßen Fangrolle in einer schematischen Schnittdarstellung;
- Fig. 3: ein Kommunikationssystem mit mehreren erfindungsgemäßen Fangrollen in einer schematischen Darstellung; und
- Fig. 4: ein erfindungsgemäßes Ausbringaggregat in einer schematischen Seitenansicht.

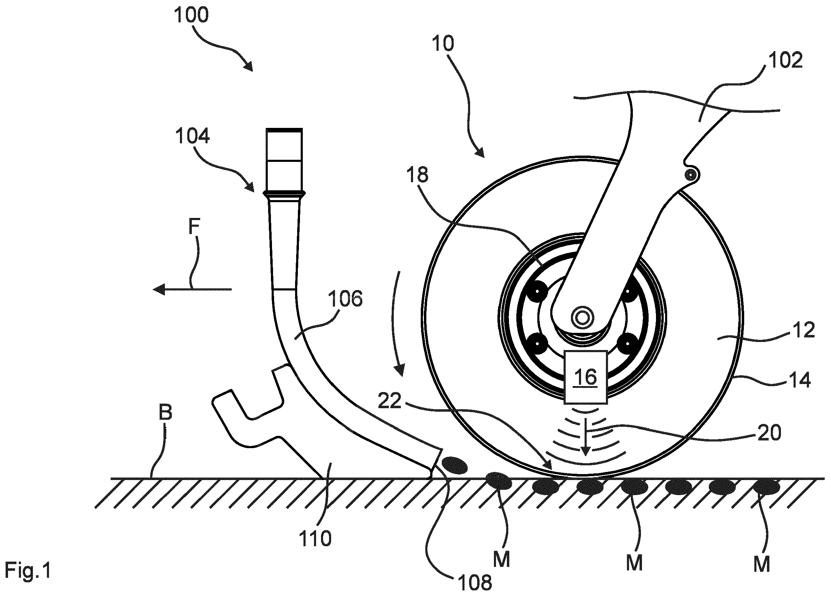

Die Fig. 1 zeigt Teile eines als Säaggregat ausgebildeten Ausbringaggregats 100 einer landwirtschaftlichen Ausbringmaschine, nämlich einer Sämaschine.

Das Ausbringaggregat 100 weist einen Trägerrahmen 102 auf, an welchem eine Ablageeinrichtung 104 und eine Fangrolle 10 befestigt ist. Die Befestigung der Ablageeinrichtung 104 an dem Trägerrahmen 102 ist nicht dargestellt.

Die Ablageeinrichtung 104 dient zum Ablegen von Material M, nämlich Saatgut, auf den Boden B einer landwirtschaftlichen Nutzfläche. Hierzu weist die Ablageeinrichtung 104 einen Schusskanal 106 für die Saatkörner auf, wobei die Saatkörner über eine im Nahbereich des Bodens B über den Boden B geführte Abgabeöffnung 108 des Schusskanals 106 in eine in Fahrtrichtung F verlaufende Ablagefurche im Boden B abgelegt werden. Die Ablageeinrichtung 104 kann ferner einen Furchenformer 110 aufweisen, welcher in Fahrtrichtung F vor dem Schusskanal 106 angeordnet ist. Der Furchenformer 110 dient zum Ausformen der Ablagefurche, in welche das Material M über den Schusskanal 106 abgegeben wird.

Die Fangrolle 10 dient zum Fangen und/oder Andrücken des auf den Boden B der landwirtschaftlichen Nutzfläche abgelegten Materials M. Die Fangrolle 10 läuft also in Fahrtrichtung F hinter der Ablageeinrichtung 104. Die Fangrolle 10 umfasst einen drehbaren Rollenkörper 12, wobei der drehbare Rollenkörper 12 mehrteilig ausgebildet ist. Der Rollenkörper 12 trägt eine umlaufende Abrollfläche 14, welche dazu eingerichtet ist, auf dem Boden B der landwirtschaftlichen Nutzfläche abzurollen.

An dem Rollenkörper 12 ist eine sensorische Detektionseinrichtung 16 der Fangrolle 10 angeordnet. Die sensorische Detektionseinrichtung 16 ist dazu eingerichtet, während einer Drehbewegung der Fangrolle 10 Bodeneigenschaften zu detektieren. Die Detektionseinrichtung 16 ist derart an dem Rollenkörper 12 befestigt, dass sich die Ausrichtung der Detektionseinrichtung 16 relativ zum Boden B während einer Drehbewegung der Fangrolle 10 verändert, wobei sich die Detektionseinrichtung 16 während der Drehbewegung der Fangrolle 10 entlang einer umlaufenden Bewegungsbahn 18 bewegt. Die Bewegungsbahn 18 der Detektionseinrichtung 16 ist eine Kreisbahn und weist einen Bahndurchmesser auf, welcher geringer ist als der Durchmesser der Abrollfläche 14. Die umlaufende Bewegungsbahn 18 der Detektionseinrichtung 16 ist also radial beabstandet von der umlaufenden Abrollfläche 14.

Die Detektionseinrichtung 16 umfasst einen berührungslos arbeitenden Sensor, dessen Detektionsrichtung 20 in radialer Richtung verläuft. Aufgrund der seitlichen Anordnung der Detektionseinrichtung 16 in Bezug auf den Rollenkörper 12 ist der Detektionsbereich 22 der Detektionseinrichtung 16 seitlich, das heißt in axialer Richtung, beabstandet von einer sich entlang einer Fangbreite erstreckenden umlaufenden Fangfläche der Fangrolle 10, wobei die umlaufende Fangfläche mit dem auf den Boden B abgelegten Material M in Kontakt kommt. Da die Detektionseinrichtung 16 gemeinsam mit dem Rollenkörper 12 der Fangrolle 10 bewegt wird, erfolgt die Detektion von Bodeneigenschaften lediglich in einem spezifischen Drehwinkelbereich des Rollenkörpers 12 und aufgrund der seitlichen Anordnung der Detektionseinrichtung 16 am Rollenkörper 12 entlang eines Detektionsstreifens, welcher seitlich beabstandet von dem in Reihe abgelegten Material M verläuft.

Die Aufgabe der Fangrolle 10 wird also dahingehend erweitert, dass die Fangrolle 10 nun auch zur Detektion von Bodeneigenschaften dient. Die Detektionseinrichtung 16 kann dazu eingerichtet sein, die Feuchtigkeit des Bodens B, die Temperatur des Bodens B, Nährwerte des Bodens B, die Art des Bodens B und/oder die elektrische Leitfähigkeit des Bodens B zu detektieren.

Durch die Integration der Detektionseinrichtung 16 in die Fangrolle 10 reduziert sich der Verschleiß an der Detektionseinrichtung 16 und es sind keine zusätzlichen Bauelemente zum Tragen der Detektionseinrichtung 16 erforderlich. Die Detektionseinrichtung 16 kann einen optischen Sensor umfassen. Ferner kann die Detektionseinrichtung 16 einen Bildsensor umfassen und/oder als Kamera ausgebildet sein.

Die Detektionseinrichtung 16 kann ferner an einer verstellbaren Positioniervorrichtung angeordnet sein, wobei die Detektionseinrichtung 16 mittels der Positioniervorrichtung relativ zur Abrollfläche 14 und/oder zum Rollenkörper 12 verschwenkt, verdreht oder verschoben werden kann.

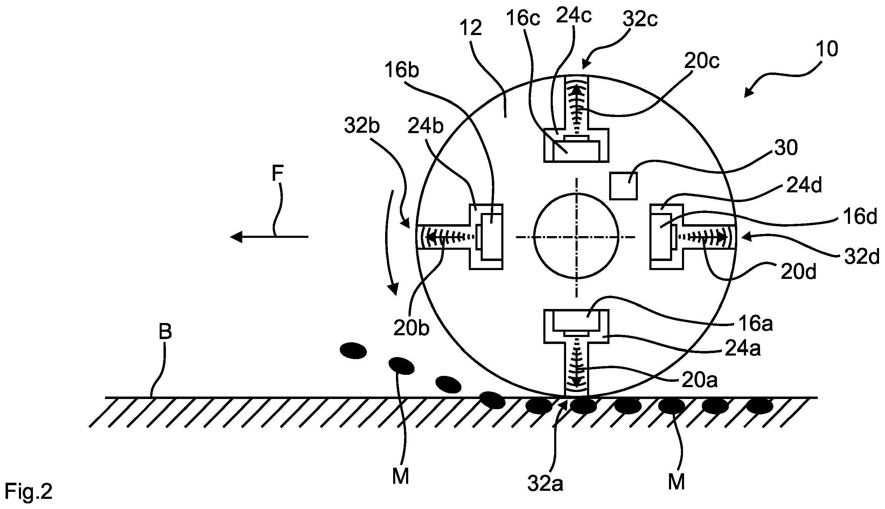

Die Fig. 2 zeigt eine Fangrolle 10 mit mehreren Detektionseinrichtungen 16a-16d. Die mehreren Detektionseinrichtungen 16a-16d sind gleichmäßig über den Umfang der Fangrolle 10 verteilt und jeweils dazu eingerichtet, während einer Drehbewegung der Fangrolle 10 Bodeneigenschaften zu detektieren. Die Detektionseinrichtungen 16a-16d weisen voneinander abweichende Ausrichtungen und somit auch voneinander abweichende Detektionsrichtungen 20a-20d auf.

Die Detektionseinrichtungen 16a-16d sind jeweils in einer fangrolleninternen Sensorkammer 24a-24d angeordnet. Die Sensorkammern 24a-24d weisen in den jeweiligen Detektionsrichtungen 20a-20d der Detektionseinrichtungen 16a-16d ein das Detektieren von Bodeneigenschaften durch die Detektionseinrichtungen 16a-16d erlaubendes Detektionsfenster 32a-32d auf. Detektionsfenster 32a-32d können offen oder geschlossen sein, beispielsweise weisen die Detektionsfenster 32a-32d eine Schutzscheibe auf.

Die Fangrolle 10 weist eine Einrichtung 30 zum Erfassen der Drehzahl und des Drehwinkels der Fangrolle 10 auf. Die Detektionseinrichtungen 16a-16d erlauben neben einer Erfassung von Bodeneigenschaften auch die Erfassung von abgelegten Materialkörnern M. Über den mittels der Einrichtung 30 erfassten Drehwinkel der Fangrolle 10 und die Signale der Detektionseinrichtungen 16a-16d können die exakten Positionen der Materialkörner M auf der landwirtschaftlichen Nutzfläche bestimmt werden.

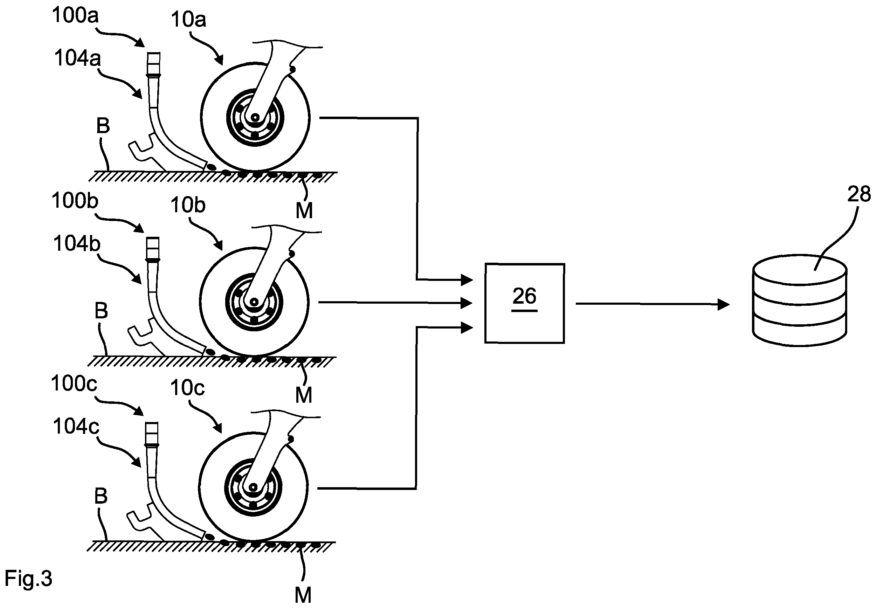

Die Fig. 3 zeigt ein Kommunikationssystem mit mehreren Fangrollen 10a-10c, wobei die Fangrollen 10a-10c jeweils einem Ausbringaggregat 100a-100c zugeordnet sind. Die Ausbringaggregate 100a-100c sind Bestandteile einer landwirtschaftlichen Ausbringmaschine, nämlich einer landwirtschaftlichen Sämaschine, wobei die Ausbringaggregate 100a-100c quer zur Fahrtrichtung F nebeneinander angeordnet sind und zum Ablegen von Material M, nämlich Saatgut, in parallelen und voneinander beabstandeten Saatreihen dienen. Zum Ablegen des Saatguts weisen die Ausbringaggregate 100a-100c jeweils eine Ablageeinrichtung 104a-104c auf.

Die Detektionseinrichtungen 16 der Fangrollen 10a-10c sind dazu eingerichtet, neben den Eigenschaften des Bodens B auch auf den Boden B abgelegtes Material M zu detektieren. Hierzu werden die Detektionseinrichtungen 16 der Fangrollen 10a-10c derart oberhalb des Materials M über den Boden geführt, dass das Material M im Detektionsbereich 22 der Detektionseinrichtungen 16 der Fangrollen 10a-10c liegt. Die Detektionseinrichtungen 16 der Fangrollen 10a-10c sind mit einer Datenübertragungseinrichtung 26 signalleitend verbunden, wobei die Datenübertragungseinrichtung 26 dazu eingerichtet ist, die Sensordaten der Detektionseinrichtungen 16 an einen Empfänger 28 zu übermitteln. Der Empfänger 28 kann beispielsweise eine Steuerungseinrichtung der Ausbringmaschine sein. Alternativ kann der Empfänger 28 auch ein maschinenexterner Empfänger, beispielsweise eine Datenbank, in welcher Sensordaten gespeichert werden, sein. Die Datenübertragung zwischen den Detektionseinrichtungen 16 der Fangrollen 10a-10c und der Datenübertragungseinrichtung 26 und die Datenübertragung von der Datenübertragungseinrichtung 26 zum Empfänger 28 kann kabelgebunden oder drahtlos erfolgen. Durch die Auswertung der Sensorwerte können Materialablageparameter, wie beispielsweise die Längsverteilung, die Aussaatstärke und/oder die Ablageposition der Materialkörner M erfasst werden. Diese Materialablageparameter können beispielsweise als Aussaatparameter in einer Datenbank zur späteren Verwendung gespeichert werden.

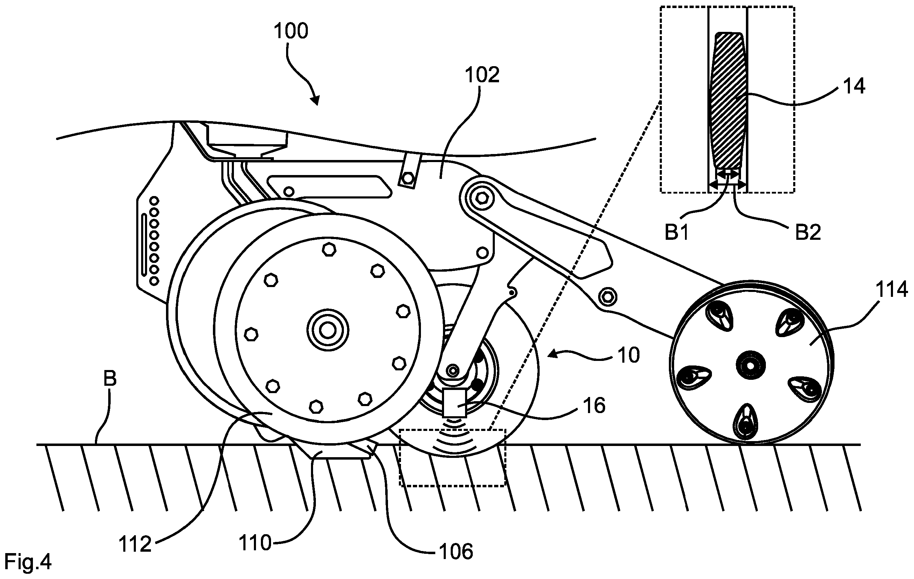

Die Fig. 4 zeigt ein Ausbringaggregat 100 mit einem Trägerrahmen 102, wobei an dem Trägerrahmen 102 Schneidscheiben 112 zum Öffnen einer Ablagefurche in dem Boden B der landwirtschaftlichen Nutzfläche angeordnet sind. Zwischen den Schneidscheiben 112 befindet sich ein Furchenformer 110 zum Ausformen der durch die Schneidscheiben 112 geöffneten Furche. Über einen Schusskanal 106 werden dann Materialkörner M, nämlich Saatkörner, in die durch den Furchenformer 110 ausgeformte Ablagefurche abgelegt. Die Fangrolle 10 dient zum Fangen und Andrücken des auf den Boden B der landwirtschaftlichen Nutzfläche abgelegten Saatguts. Die Fangrolle 10 ist erneut mit einer Detektionseinrichtung zum Detektieren von Bodeneigenschaften ausgestattet. In Fahrtrichtung F hinter der Fangrolle 10 verläuft ein Paar von V-förmig angestellten Andruckrollen 114, über welche die Ablagefurche geschlossen und das zum Schließen in die Ablagefurche beförderte Material angedrückt wird.

Die Detektionseinrichtung 16 ist dazu eingerichtet, die seitliche Ausdehnung der Fangrolle 10, nämlich die seitliche Ausdehnung der Abrollfläche 14, zu erfassen. Die Fangrolle 10 verrichtet beim Abrollen eine Walkarbeit, wobei die Fangrolle 10 beim Walken seitlich ausgedehnt bzw. ausgebeult wird. Durch Messen der seitlichen Ausdehnung der Fangrolle 10 über die Detektionseinrichtung 16 kann die Ablagetiefe des Materials M ermittelt werden. Die Detektionseinrichtung 16 kann beispielsweise als Kamera ausgebildet sein und die Fangrollenbreite B1 in einem unverformten Bereich der Fangrolle 10 und die Fangrollenbreite B2 im Bodenkontaktbereich der Fangrolle 10 erfassen. Über die Fangrollenbreiten B1, B2 kann dann die seitliche Ausdehnung der Fangrolle 10 zur Ermittlung der Ablagetiefe berechnet werden. Die Berechnung erfolgt vorzugsweise über eine mit der Detektionseinrichtung 16 verbundene Datenverarbeitungseinrichtung.

### Bezugszeichenliste

- 10, 10a-10c: Fangrollen
- 12: Rollenkörper
- 14: Abrollfläche
- 16, 16a-16d: Detektionseinrichtungen
- 18: Bewegungsbahn
- 20, 20a-20d: Detektionsrichtungen
- 22: Detektionsbereich
- 24a-24d: Sensorkammern
- 26: Datenübertragungseinrichtung
- 28: Empfänger
- 30: Drehzahlerfassungseinrichtung
- 32a-32d: Detektionsfenster

- 100, 100a-100c: Ausbringaggregate
- 102: Trägerrahmen
- 104, 104a-104c: Ablageeinrichtungen
- 106: Schusskanal
- 108: Abgabeöffnung
- 110: Furchenformer
- 112: Schneidscheiben
- 114: Andruckrollen

- B: Boden
- B1, B2: Fangrollenbreite
- F: Fahrtrichtung
- M: Material

## Patentansprüche

1. Fangrolle (10, 10a-10c) für ein Ausbringaggregat (100, 100a-100c) einer landwirtschaftlichen Ausbringmaschine,
mit zumindest einer sensorischen Detektionseinrichtung (16, 16a-16d), welche dazu eingerichtet ist, während einer Drehbewegung der Fangrolle (10, 10a-10c) Bodeneigenschaften zu detektieren,
**dadurch gekennzeichnet, dass** die eine oder die mehreren Detektionseinrichtungen (16, 16a-16d) dazu eingerichtet sind, einen oder mehrere der folgenden Bodenparameter zu detektieren:
- die Feuchtigkeit des Bodens (B);
- die Temperatur des Bodens (B);
- Nährwerte des Bodens (B);
- die elektrische Leitfähigkeit des Bodens (B).

2. Fangrolle (10, 10a-10c) nach Anspruch 1,
**dadurch gekennzeichnet, dass** die Detektionseinrichtung (16, 16a-16d) derart angeordnet ist, dass sich die Ausrichtung der Detektionseinrichtung (16, 16a-16d) relativ zum Boden (B) während einer Drehbewegung der Fangrolle (10, 10a-10c) verändert und/oder dass sich die Detektionseinrichtung (16, 16a-16d) während einer Drehbewegung der Fangrolle (10, 10a-10c) entlang einer umlaufenden Bewegungsbahn (18) bewegt.

3. Fangrolle (10, 10a-10c) nach Anspruch 2,
**gekennzeichnet durch** eine umlaufende Abrollfläche (14), welche dazu eingereicht ist, auf dem Boden (B) einer landwirtschaftlichen Nutzfläche abzurollen, wobei die umlaufende Bewegungsbahn (18) der Detektionseinrichtung (16, 16a-16d) vorzugsweise radial beabstandet von der umlaufenden Abrollfläche (14) verläuft.

4. Fangrolle (10, 10a-10c) nach einem der vorstehenden Ansprüche,
**gekennzeichnet durch** einen drehbaren Rollenkörper (12), wobei die Detektionseinrichtung (16, 16a-16d) an oder in dem Rollenkörper (12) befestigt ist.

5. Fangrolle (10, 10a-10c) nach Anspruch 3 oder 4,
**dadurch gekennzeichnet, dass** die Detektionseinrichtung (16, 16a-16d) an einer verstellbaren Positioniervorrichtung angeordnet ist und die Position der Detektionseinrichtung (16, 16a-16d) mittels der Positioniervorrichtung relativ zur Abrollfläche (14) und/oder zum Rollenkörper (12) veränderbar ist.

6. Fangrolle (10, 10a-10c) nach einem der vorstehenden Ansprüche,
**gekennzeichnet durch** eine sich in axialer Richtung entlang einer Fangbreite erstreckende umlaufende Fangfläche, welche dazu eingerichtet ist, vor der Fangrolle (10, 10a-10c) auf den Boden (B) der landwirtschaftlichen Nutzfläche abgelegtes Material (M) zu fangen,
- wobei die Detektionseinrichtung (16, 16a-16d) hinsichtlich der Axialpositionierung innerhalb oder außerhalb der Fangbreite angeordnet ist; und/oder
- wobei die Detektionseinrichtung (16, 16a-16d) einen Detektionsbereich (22) aufweist, welcher im Bereich des Bodens (B) der landwirtschaftlichen Nutzfläche hinsichtlich der Axialpositionierung innerhalb oder außerhalb der Fangbreite liegt.

7. Fangrolle (10, 10a-10c) nach einem der vorstehenden Ansprüche,
**gekennzeichnet durch** eine Sensorkammer (24a-24d), in welcher die Detektionseinrichtung (16, 16a-16d) angeordnet ist, wobei die Detektionseinrichtung (16, 16a-16d) dazu eingerichtet ist, Bodeneigenschaften eines in einer Detektionsrichtung (20, 20a-20d) der Detektionseinrichtung (16, 16a-16d) befindlichen Bodenbereichs zu detektieren und wobei vorzugsweise die Sensorkammer (24a-24d) in der Detektionsrichtung (20, 20a-20d) der Detektionseinrichtung (16, 16a-16d) ein das Detektieren von Bodeneigenschaften **durch** die Detektionseinrichtung (16, 16a-16d) erlaubendes Detektionsfenster (32a-32d) aufweist.

8. Fangrolle (10, 10a-10c) nach einem der vorstehenden Ansprüche, **gekennzeichnet durch** mehrere Detektionseinrichtungen (16, 16a-16d), welche jeweils dazu eingerichtet sind, während einer Drehbewegung der Fangrolle (10, 10a-10c) Bodeneigenschaften zu detektieren, wobei die Detektionseinrichtungen (16, 16a-16d) voneinander abweichende Ausrichtungen und/oder Detektionsrichtungen (20, 20a-20d) aufweisen.

9. Fangrolle (10, 10a-10c) nach einem der vorstehenden Ansprüche, **dadurch gekennzeichnet, dass** die eine oder die mehreren Detektionseinrichtungen (16, 16a-16d) dazu eingerichtet sind die Art des Bodens (B) zu detektieren.

10. Fangrolle (10, 10a-10c) nach einem der vorstehenden Ansprüche, **dadurch gekennzeichnet, dass** die eine oder die mehreren Detektionseinrichtungen (16, 16a-16d) dazu eingerichtet sind, auf den Boden (B) abgelegtes Material (M) und/oder Eigenschaften des auf den Boden (B) abgelegten Materials (M) zu detektieren.

11. Fangrolle (10, 10a-10c) nach einem der vorstehenden Ansprüche, **dadurch gekennzeichnet, dass** die Detektionseinrichtung (16, 16a-16d) derart angeordnet ist, dass die Ausrichtung der Detektionseinrichtung (16, 16a-16d) während einer Drehbewegung der Fangrolle (10, 10a-10c) relativ zum Boden (B) im Wesentlichen beibehalten wird.

12. Fangrolle (10, 10a-10c) nach einem der vorstehenden Ansprüche, **gekennzeichnet durch** eine Energieversorgungseinrichtung, welche dazu eingerichtet ist, der Detektionseinrichtung (16, 16a-16d) kabelgebunden oder drahtlos elektrische Energie bereitzustellen.

13. Fangrolle (10, 10a-10c) nach Anspruch 12,
**dadurch gekennzeichnet, dass** die Energieversorgungseinrichtung einen elektrischen Generator umfasst, welcher dazu eingerichtet ist, die aus der Drehbewegung der Fangrolle (10, 10a-10c) resultierende Bewegungsenergie in elektrische Energie für den Betrieb der Detektionseinrichtung (16, 16a-16d) zu wandeln.

14. Fangrolle (10, 10a-10c) nach einem der vorstehenden Ansprüche, **gekennzeichnet durch** eine Datenübertragungseinrichtung (26), welche dazu eingerichtet ist, Sensordaten der Detektionseinrichtung (16, 16a-16d) kabelgebunden oder drahtlos an einen Empfänger (28) zu übermitteln.

15. Ausbringaggregat (100, 100a-100c) für eine landwirtschaftliche Ausbringmaschine, mit
- einer Ablageeinrichtung (104, 104a-104c), mittels welcher Material (M) auf den Boden (B) einer landwirtschaftlichen Nutzfläche ablegbar ist; und
- einer Fangrolle (10, 10a-10c) zum Fangen und/oder Andrücken des auf den Boden (B) der landwirtschaftlichen Nutzfläche abgelegten Materials (M);
**dadurch gekennzeichnet, dass** die Fangrolle (10, 10a-10c) nach einem der vorstehenden Ansprüche ausgebildet ist.

## Claims

1. Catching roller (10, 10a-10c) for a spreading unit (100, 100a-100c) of an agricultural spreading machine,
comprising at least one sensor-based detection device (16, 16a-16d) which is configured to detect soil properties during a rotational movement of the catching roller (10, 10a-10c),
**characterized in that** the one or more detection devices (16, 16a-16d) are configured to detect one or more of the following soil parameters:
- the moisture of the soil (B);
- the temperature of the soil (B);
- nutritional values of the soil (B);
- the electrical conductivity of the soil (B).

2. Catching roller (10, 10a-10c) according to claim 1,
**characterized in that** the detection device (16, 16a-16d) is arranged in such a way that the orientation of the detection device (16, 16a-16d) relative to the soil (B) changes during a rotational movement of the catching roller (10, 10a-10c) and/or in that the detection device (16, 16a-16d) moves along a circumferential movement path (18) during a rotational movement of the catching roller (10, 10a-10c).

3. Catching roller (10, 10a-10c) according to claim 2,
**characterized by** a circumferential rolling surface (14) which is configured to roll on the soil (B) of an agricultural area, the circumferential movement path (18) of the detection device (16, 16a-16d) preferably running at a radial distance from the circumferential rolling surface (14).

4. Catching roller (10, 10a-10c) according to any of the preceding claims,
**characterized by** a rotatable roller body (12), the detection device (16, 16a-16d) being fastened to or in the roller body (12).

5. Catching roller (10, 10a-10c) according to claim 3 or 4,
**characterized in that** the detection device (16, 16a-16d) is arranged on an adjustable positioning apparatus and the position of the detection device (16, 16a-16d) is changeable relative to the rolling surface (14) and/or to the roller body (12) by means of the positioning apparatus.

6. Catching roller (10, 10a-10c) according to any of the preceding claims,
**characterized by** a circumferential catching surface which extends in the axial direction along a catching width and is configured to catch material (M) deposited in front of the catching roller (10, 10a-10c) on the soil (B) of the agricultural area,
- the detection device (16, 16a-16d) being arranged inside or outside the catching width with respect to the axial positioning; and/or
- the detection device (16, 16a-16d) having a detection region (22) which is located in the region of the soil (B) of the agricultural area, inside or outside the catching width with respect to the axial positioning.

7. Catching roller (10, 10a-10c) according to any of the preceding claims,
**characterized by** a sensor chamber (24a-24d) in which the detection device (16, 16a-16d) is arranged, the detection device (16, 16a-16d) being configured to detect soil properties of a soil region located in a detection direction (20, 20a-20d) of the detection device (16, 16a-16d) and the sensor chamber (24a-24d) preferably having in the detection direction (20, 20a-20d) of the detection device (16, 16a-16d) a detection window (32a-32d) allowing the detection device (16, 16a-16d) to detect soil properties.

8. Catching roller (10, 10a-10c) according to any of the preceding claims,
**characterized by** a plurality of detection devices (16, 16a-16d) which are each configured to detect soil properties during a rotational movement of the catching roller (10, 10a-10c), the detection devices (16, 16a-16d) having mutually different orientations and/or detection directions (20, 20a-20d).

9. Catching roller (10, 10a-10c) according to any of the preceding claims,
**characterized in that** the one or more detection devices (16, 16a-16d) are configured to detect the type of soil (B).

10. Catching roller (10, 10a-10c) according to any of the preceding claims,
**characterized in that** the one or more detection devices (16, 16a-16d) are configured to detect material (M) deposited on the soil (B) and/or properties of the material (M) deposited on the soil (B).

11. Catching roller (10, 10a-10c) according to any of the preceding claims,
**characterized in that** the detection device (16, 16a-16d) is arranged in such a way that the orientation of the detection device (16, 16a-16d) is substantially maintained relative to the soil (B) during a rotational movement of the catching roller (10, 10a-10c).

12. Catching roller (10, 10a-10c) according to any of the preceding claims,
**characterized by** an energy supply device which is configured to provide electrical energy to the detection device (16, 16a-16d) in a wired or wireless manner.

13. Catching roller (10, 10a-10c) according to claim 12,
**characterized in that** the energy supply device comprises an electric generator which is configured to convert the movement energy resulting from the rotational movement of the catching roller (10, 10a-10c) into electrical energy for the operation of the detection device (16, 16a-16d).

14. Catching roller (10, 10a-10c) according to any of the preceding claims,
**characterized by** a data transmission device (26) which is configured to transfer sensor data from the detection device (16, 16a-16d) to a receiver (28) in a wired or wireless manner.

15. Spreading unit (100, 100a-100c) for an agricultural spreading machine, which spreading unit comprises
- a deposit device (104, 104a-104c) by means of which material (M) is depositable on the soil (B) of an agricultural area; and
- a catching roller (10, 10a-10c) for catching and/or pressing down the material (M) deposited on the soil (B) of the agricultural area;
**characterized in that** the catching roller (10, 10a-10c) is designed according to any of the preceding claims.

## Revendications

1. Rouleau de capture (10, 10a-10c) pour une unité d'épandage (100, 100a-100c) d'une machine d'épandage agricole,
comportant au moins un appareil de détection (16, 16a-16d) sensoriel, qui est conçu pour détecter des propriétés de sol pendant un mouvement de rotation du rouleau de capture (10, 10a-10c),
**caractérisé en ce que** les un ou plusieurs appareils de détection (16, 16a-16d) sont conçus pour détecter un ou plusieurs des paramètres de sol suivants :
- l'humidité du sol (B) ;
- la température du sol (B) ;
- des valeurs nutritives du sol (B) ;
- la conductivité électrique du sol (B).

2. Rouleau de capture (10, 10a-10c) selon la revendication 1,
**caractérisé en ce que** l'appareil de détection (16, 16a-16d) est agencé de telle sorte que l'orientation de l'appareil de détection (16, 16a-16d) par rapport au sol (B) change pendant un mouvement de rotation du rouleau de capture (10, 10a-10c) et/ou que l'appareil de détection (16, 16a-16d) se déplace pendant un mouvement de rotation du rouleau de capture (10, 10a-10c) le long d'une trajectoire de mouvement (18) périphérique.

3. Rouleau de capture (10, 10a-10c) selon la revendication 2,
**caractérisé par** une surface de roulement (14) périphérique qui est conçue pour rouler sur le sol (B) d'une surface agricole utile, dans lequel la trajectoire de mouvement (18) périphérique de l'appareil de détection (16, 16a-16d) s'étend de préférence à une distance radiale de la surface de roulement (14) périphérique.

4. Rouleau de capture (10, 10a-10c) selon l'une des revendications précédentes,
**caractérisé par** un corps de rouleau (12) rotatif, dans lequel l'appareil de détection (16, 16a-16d) est fixé sur ou dans le corps de rouleau (12).

5. Rouleau de capture (10, 10a-10c) selon la revendication 3 ou 4,
**caractérisé en ce que** l'appareil de détection (16, 16a-16d) est agencé sur un dispositif de positionnement réglable et la position de l'appareil de détection (16, 16a-16d) peut être changée au moyen du dispositif de positionnement par rapport à la surface de roulement (14) et/ou au corps de rouleau (12).

6. Rouleau de capture (10, 10a-10c) selon l'une des revendications précédentes,
**caractérisé par** une surface de capture périphérique se prolongeant dans la direction axiale le long d'une largeur de capture, laquelle surface est conçue pour capturer le matériau (M) déposé sur le sol (B) de la surface agricole utile devant le rouleau de capture (10, 10a-10c),
- dans lequel l'appareil de détection (16, 16a-16d) est agencé en ce qui concerne le positionnement axial à l'intérieur ou à l'extérieur de la largeur de capture ; et/ou
- dans lequel l'appareil de détection (16, 16a-16d) présente une zone de détection (22) qui se situe dans la zone du sol (B) de la surface agricole utile, en ce qui concerne le positionnement axial, à l'intérieur ou à l'extérieur de la largeur de capture.

7. Rouleau de capture (10, 10a-10c) selon l'une des revendications précédentes,
**caractérisé par** une chambre de capteur (24a-24d) dans laquelle l'appareil de détection (16, 16a-16d) est agencé, dans lequel l'appareil de détection (16, 16a-16d) est conçu pour détecter des propriétés de sol d'une zone de sol se trouvant dans une direction de détection (20, 20a-20d) de l'appareil de détection (16, 16a-16d) et dans lequel, de préférence, la chambre de capteur (24a-24d) présente, dans la direction de détection (20, 20a-20d) de l'appareil de détection (16, 16a-16d), une fenêtre de détection (32a-32d) permettant la détection de propriétés de sol par l'appareil de détection (16, 16a-16d).

8. Rouleau de capture (10, 10a-10c) selon l'une des revendications précédentes,
**caractérisé par** plusieurs appareils de détection (16, 16a-16d) qui sont respectivement conçus pour détecter, pendant un mouvement de rotation du rouleau de capture (10, 10a-10c), des propriétés de sol, dans lequel les appareils de détection (16, 16a-16d) présentent des orientations et/ou des directions de détection (20, 20a-20d) différentes les unes des autres.

9. Rouleau de capture (10, 10a-10c) selon l'une des revendications précédentes,
**caractérisé en ce que** les un ou plusieurs appareils de détection (16, 16a-16d) sont conçus pour détecter le type de sol (B).

10. Rouleau de capture (10, 10a-10c) selon l'une des revendications précédentes,
**caractérisé en ce que** les un ou plusieurs appareils de détection (16, 16a-16d) sont conçus pour détecter le matériau (M) déposé sur le sol (B) et/ou des propriétés du matériau (M) déposé sur le sol (B).

11. Rouleau de capture (10, 10a-10c) selon l'une des revendications précédentes,
**caractérisé en ce que** l'appareil de détection (16, 16a-16d) est agencé de telle sorte que l'orientation de l'appareil de détection (16, 16a-16d) est sensiblement maintenue pendant un mouvement de rotation du rouleau de capture (10, 10a-10c) par rapport au sol (B).

12. Rouleau de capture (10, 10a-10c) selon l'une des revendications précédentes,
**caractérisé par** un appareil d'alimentation en énergie qui est conçu pour fournir de l'énergie électrique à l'appareil de détection (16, 16a-16d) par câble ou sans fil.

13. Rouleau de capture (10, 10a-10c) selon la revendication 12,
**caractérisé en ce que** l'appareil d'alimentation en énergie comprend un générateur électrique qui est conçu pour convertir l'énergie cinétique résultant du mouvement de rotation du rouleau de capture (10, 10a-10c) en énergie électrique pour le fonctionnement de l'appareil de détection (16, 16a-16d).

14. Rouleau de capture (10, 10a-10c) selon l'une des revendications précédentes,
**caractérisé par** un appareil de transmission de données (26) qui est conçu pour transmettre par câble ou sans fil des données de capteur de l'appareil de détection (16, 16a-16d) à un récepteur (28).

15. Unité d'épandage (100, 100a-100c) pour une machine d'épandage agricole, comportant
- un appareil de dépôt (104, 104a-104c), par le biais duquel du matériau (M) peut être déposé sur le sol (B) d'une surface agricole utile ; et
- un rouleau de capture (10, 10a-10c) permettant de capturer et/ou presser le matériau (M) déposé sur le sol (B) de la surface agricole utile ;
**caractérisée en ce que** le rouleau de capture (10, 10a-10c) est réalisé selon l'une des revendications précédentes.
